# EUROPEAN PATENT SPECIFICATION

(11) **EP 0 666 800 B1**
(45) Date of publication and mention of the grant of the patent: **23.04.1997**
(21) Application number: 93923569.3
(22) Date of filing: 29.10.1993
(51) Int. Cl.: B32B 27/32

(54) **PEELABLE FILM AND METHOD OF MAKING A PEELABLE FILM**
ABZIEHBARE FOLIE UND VERFAHREN ZU DEREN HERSTELLUNG
FILM DETACHABLE ET PROCEDE DE FABRICATION

(30) Priority: 30.10.1992 GB 9222780; 21.07.1993 GB 9315122
(43) Date of publication of application: 16.08.1995
(73) Proprietor: MOBILE PLASTICS EUROPE, INC., B-6761 Virton (BE)
(72) Inventor: AMBROISE, Benoit, F-55150 Brandeville (FR); PETITJEAN, Maurice, F-08110 Williers (FR)
(74) Representative: Colmer, Stephen Gary
(86) International application number: EP9303013
(87) International publication number: WO9409985

(56) References cited:
- EP-A- 0 128 677
- EP-A- 0 237 213
- EP-A- 0 388 086
- US-A- 4 564 558
- US-A- 4 944 990

## Description

This invention relates to a peelable film and to a method of making a peelable film.

In packaging there is a need for film which can securely package articles (such as food), and which at the same time is easy to open. Such packaging can be provided by using peelable films. It is an object of the present invention to provide an improved peelable film.

According to one aspect of the present invention there is provided a peelable film comprising:
(A) a core layer comprising an olefin polymer
(B) a skin layer on at least one surface of the core layer, comprising:
   (i) a blend of a butylene polymer with another olefin polymer; or
   (ii) a polymer of butylene and one other olefin; and
(C) a coating layer comprising a heat-sealable polymer on the the skin layer; said film being peelable between the coating layer and the skin layer or within the coating layer itself.

EP-A-0 237 213 discloses a film laminate comprising an olefin polymer core, a heat-sealable skin layer comprising heat sealable copolymer or blend of copolymers, heat sealable blend of homopolymers or heat sealable blend of at least one copolymer and at least one homopolymer, and a coating layer. It does not disclose an embodiment where the coating has a heat-sealable polymer, nor does it disclose a film which is peelable between the coating and skin layers.

US-A-4 944 990 broadly discloses a multi-layer heat sealable structure comprising a substrate comprising white opaque polyolefin film, and a coextruded second layer comprising heat sealable homopolymer, copolymer, terpolymer or blends thereof. The reference fails to disclose or suggest (i) blends of butylene polymer with another olefin polymer or (ii) copolymer of butylene and one other olefin as skin layer components as required by the present invention. The reference fails to disclose the specified peelability of the present invention.

US-A-4 564 558 discloses heat sealable multi-layer films having (a) polyolefin substrate layer; (b) terpolymer layer on (a); (c) primer coating on layer (b); and (d) PVdC or acrylic heat sealable layer on (c). The reference does not disclose as (b) a blend of a butylene polymer with another olefin polymer or a copolymer of butylene and one other olefin.

EP-A-0 128 677 teaches a skin layer which is a blend of propylene-ethylene end block copolymer and ethylene-monoalphaolefin random copolymer, e.g., ethylene-butylene copolymer. It neither discloses nor suggests a skin layer comprising a blend of a butylene polymer with another olefin polymer or a copolymer of butylene and one other olefin. Nor does the reference suggest a film which is peelable between the coating and skin layers or within the coating itself.

EP-A-0 388 086 discloses a multi-layer film having a skin layer which can contain copolymer of propylene and butylene as well as an optional heat sealable layer (PVdC, acrylic, e.g.) on the skin layer. It teaches away from the present invention inasmuch as it teaches applying a heat sealable layer to the skin layer only where the skin layer is itself not heat sealable. The "copolymer of propylene and butylene" set out in the reference is itself characterized as a "heat sealable material." Thus the reference fails to disclose or suggest the presently claimed combination which requires the presence of butylene homopolymer or copolymer of butylene and one other olefin, along with a coating layer containing heat sealable polymer. Moreover, the specification itself teaches copolymers of propylene and butylene only as components in a blend with homopolymers. Finally, there is no disclosure of a film which peels between the coating layer and the skin layer, or within the coating layer itself.

Advantageously the core layer is an oriented olefin polymer, preferably a biaxially oriented olefin polymer.

The core layer may be cavitated as disclosed in our EP-A-0083495. The core layer may be described in European Patent No. 258010, i.e., a voided core layer comprising a matrix of a thermoplastic polymeric material in which is dispersed void initiating solid particles which are phase distinct from the thermoplastic polymeric material of the matrix and about which particles are located opacifying voids and a minor amount of a light absorbing pigment.

It is particularly preferred that the core layer is isotactic polypropylene, but the core layer may instead be high density polyethylene.

When the skin layer is a blend it is preferably one of: a blend of polybutylene with polyethylene; a blend of polybutylene with polypropylene; a blend of polybutylene with a polypropylene copolymer; or a blend of polybutylene with a polypropylene terpolymer.

The polyethylene may comprise high density polyethylene, medium density polyethylene, low density polyethylene, linear low density polyethylene; or a copolymer of ethylene with polar monomers such as vinyl acetate or methyl acrylate.

When the skin layer is a polymer of butylene and one other olefin, it preferably comprises a copolymer of butylene and propylene.

The coating layer comprises a heat-sealable polymer. The heat-sealable polymer is preferably an acrylic polymer or polyvinylidene chloride.

Advantageously there is a primer for the coating provided between the skin layer and the coating layer. The primer improves the adhesion of the coating layer to the skin layer, but does not inhibit peelability. The nature of the primer will depend on the coating layer utilised: aqueous polyethyleneimine solution based primers may be used for acrylic coating layers while water-dispersed epoxy resin-based primers may be used for vinylidene chloride polymer coating layers or acrylic coating layers. Polyethylene imine, or a blend of polyethylene imine and epoxy resin can also be used for acrylic based coating layers.

Thus the primers may comprise the reaction product of an epoxy resin and an acidified aminoethylated vinyl polymer. The contemplated epoxy resins are glycidyl ethers of polyhydroxy compounds. Typical polyhydroxy compounds which may be used include bisphenol A, ring substituted bisphenol A, resorcinol, hydroquinone, phenolformaldehyde novolac resins, aliphatic diols, such as ethylene glycol, propylene glycol, 1,4-butanediol, 1,6-hexanediol, glycerol, lower alkyl hydantoins or mixtures thereof.

The preferred epoxy resins of the present invention are those made by the glycidation reaction between epichlorohydrin and bisphenol A. Epoxy resins of this type are commonly classified by their epoxy equivalent weight (EEW) which is defined as the weight of resin in grams which contains one gram equivalent of epoxy resins. Resins with an EEW ranging from 170 to 280 may be used in the present invention, but the preferred range is 180 to 210.

A variation in the composition of the epoxy resin component is one in which a hydantoin compound is substituted for the bisphenol A. For example, 1,1-dimethyl hydantoin may be employed in a lower molecular weight epoxy resin since resins based on this material are completely water soluble thereby eliminating the necessity for emulsification.

Although the specific structure of the epoxy resin is not critical to the primer employed in the present invention, important considerations in the selection of the epoxy resin revolve around its physical state. For example, it must be liquid and capable of being readily dispersed or dissolved with the second component or curing agent as described hereinbelow. If the epoxy resin is of low viscosity, it may be stirred directly into the second component, i.e., curing agent, however, it is preferred to employ the epoxy resin in an aqueous emulsion.

The second component in the epoxy primer compositions of the present invention is an amino modified acrylic polymer which is water soluble. This polymer is a curing agent for the epoxy compound. The preferred material is described in US-A-3,719,629 and may be generically described as an acidified aminoethylate interpolymer having pendant aminoalkylate groups. This material is produced by polymerizing acrylate, methacrylate, styrene or other suitable monomers with sufficient methacrylic or acrylic acid to give a --COOH content of 7.5 to 12.5%. Solvent polymerization techniques are preferred. The polymer is then reacted with ethyleneimine monomer and acidified with hydrochloric acid to render the polymer water soluble.

The primer may also comprise a poly(ethylene imine). The imine primer provides an overall adhesively active surface for thorough and secure bonding with the subsequent applied heat seal composition. It has been found that an effective coating solution concentration of the poly(ethylene imine) applied from either aqueous or organic solvent media, such as ethanol, is a solution comprising 0.1-0.6% by weight of the poly(ethylene-imine). A commercially available material of this type is known as Polymin M, a product of BASF-Wyandotte Corp.

The surface of the skin layer which receives the coating layer can be subjected to a surface modifying treatment by corona discharge, flame or oxidising chemicals. Preferably the surface is treated by flame or corona to a surface activity of at least 36 dynes/cm (36 mN/m), preferably to approximately 40 dynes/cm (40mN/m).

The polybutylene is preferably present in the skin layer in an amount from 5 to 50 wt%, more preferably 10 to 30 wt%. When the skin layer is a polymer of butylene with at least one other olefin, then the butylene content of the polymer is preferably present in the skin layer in an amount from 5 to 50 wt%, more preferably 10 to 30 wt%.

The polypropylene copolymer is suitably a copolymer of ethylene and propylene or of butylene and propylene. Particularly preferred copolymers are ethylene-propylene copolymers containing from 1 to 30 wt%, preferably from 2 to 7 wt%, more preferably 3 to 5 wt%, ethylene and having a melt flow rate at 230°C ranging from 2 to 15, more preferably 3 to 8, a crystalline melting point in the range 125 to 150°C, a number average molecular weight range from 25000 to 100000, and a density from 0.89 to 0.90. Preferred copolymers of butylene and propylene contain up to 30 wt% butylene.

The polypropylene terpolymer is suitably a terpolymer of ethylene, propylene, and butylene containing from 1 to 10, and preferably from 2 to 6, wt% ethylene, from 80 to 97, and preferably from 88 to 95, wt% propylene, and from 1 to 20, and preferably from 2 to 15, wt% butene-1.

In one embodiment the skin and coating layers are provided on both surfaces of the core layer.

According to another aspect of the present invention there is provided a method of making a peelable film comprising coextruding a core layer comprising an olefin polymer with a skin layer comprising either: (i) a blend of a butylene polymer with another olefin polymer; or (ii) a polymer of butylene and one other olefin; and coating said skin layer with a coating layer comprising a heat-sealable polymer; the film being peelable between the coating layer and the skin layer or within the coating layer itself.

The core layer is preferably coextruded with the skin layer and then is desirably biaxially oriented. The polymers can be brought to the molten state and coextruded from a conventional extruder through a flat sheet die, the melt streams being combined in an adaptor prior to being extruded from the die. After leaving the die orifice, the multi-layer film structure is chilled and the quenched sheet is then preferably reheated and stretched, e.g., 4 to 6 times in the machine direction at approximately 250°F (121°C) and subsequently, for example, 8 to 10 times in the transverse direction at approximately 320°F (160°C).

The peelable film according to the invention is advantageously used in packaging for articles, such as food, imparting a good appearance (low haze and high gloss), high aroma barrier, and excellent surface properties such as low coefficient of friction and good printabilities.

The peelable film according to the present invention has superior peelability to peelable film in the prior art. The film peels between the coating layer and the skin layer, or within the coating itself, rather than within the skin layer, or between the core layer and the skin layer.

### Examples

### Comparative Example 1

A film (A) was produced by extruding a core layer with a skin layer. After extrusion the film was biaxially oriented. One side of the film (A) was corona treated after biaxial orientation. The core layer comprised Fina polypropylene and was free of additives. The skin layer comprised a blend of 70 wt% polypropylene terpolymer and 30 wt% polybutylene. The polypropylene terpolymer was Chisso 7510, which is a terpolymer containing 95.4 wt% polypropylene, 1.9 wt% ethylene and 2.7 wt% butylene. The polybutylene was PB8240, which is available from Shell.

### Comparative Example 2

A film (B) was produced by extruding a core layer with a skin layer. After extrusion the film was biaxially oriented. One side of the film (B) was corona treated after biaxial orientation. The core layer comprised Fina polypropylene and was free of additives. The skin layer comprised a blend of 60 wt% LLDPE (linear low density polyethylene), 30 wt% polybutylene and 10 wt% polypropylene terpolymer. The polypropylene terpolymer and the polybutylene were the same as in example 1. The LLDPE was Dow 4201.

### Example 1(a)

The film (A) of comparative example 1 was used to produce a film (C). The skin layer of film (A) was subjected to corona treatment and then primed with a polyethyleneimine primer. An acrylic coating was then applied to the primed skin layer. The acrylic coating was as described in EP-A-0237213 and was composed of about 4% methacrylic acid, 54% methyl methacrylate and 42% methyl acrylate.

### Example 1(b)

The film (A) of comparative example 1 was used to produce a film (D). The skin layer of film (A) was subjected to corona treatment, and then primed with an epoxy resin primer. The primer was made by the glycidation reaction between epichlorohydrin and bisphenol A, and an amino modified acrylic polymer as a hardener. A polyvinylidene chloride coating was then applied to the primed skin layer.

### Example 2(a)

The film (B) of comparative example 2 was used to produce a film (E). The skin layer of film (B) was subjected to corona treatment, and then primed with a polyethyleneimine primer. An acrylic coating was then applied to the primed skin layer. The acrylic coating was the same as in Example 1(a).

### Example 2(b)

The film (B) of comparative example 2 was used to produce a film (F). The skin layer of film (B) was subjected to corona treatment, and then primed with an epoxy resin primer. The epoxy resin primer was the same as in Example 1(b). A polyvinylidene chloride coating was then applied to the primed skin layer.

Two sets of heat-sealed samples of films (A) to (F) were produced, one set using the LPS (Low Pressure Sealing) apparatus and the other set using the Otto Bruger apparatus. For films (A) and (B), the skin layer was heat-sealed to another film; for films (C) to (F), the coating layer was heat-sealed to another film.

With the LPS apparatus the sealing time was 0.2s, the sealing pressure was 35 gcm⁻², and only one sealing jaw was heated. With the Otto Bruger apparatus the sealing time was 0.2s. the sealing pressure was 2.5 bars, and both sealing jaws were heated. Each sealing operation was carried out at a variety of sealing temperatures.

Test strips of 25mm width were cut from each of the sealed samples: the force required to separate the test strips was determined with a tensile tester and reported in Tables 1 and 2 as a function of sealing temperature.

**TABLE 1**

| **Sealing on Otto Bruger Apparatus** (Pressure: 2.5 Bars; Dwell Time: 0.2s) | | | | | | |
|---|---|---|---|---|---|---|
| Film | 100°C | 110°C | 120°C | 130°C | 140°C | 150°C |
| A | 45 | 70 | 125 | 205* | 220* | 345* |
| B | 10 | 35 | 150 | 165 | 265** | 480* |
| C | 110 | 170 | 240 | 440 | 430 | 510 |
| D | 90 | 160 | 210 | 290 | 310 | 390 |
| E | 90 | 140 | 190 | 290 | 280 | 400 |
| F | 100 | 170 | 210 | 310 | 370 | 410 |

| | | | | | | |
|---|---|---|---|---|---|---|
| * Skin delamination occurred | | | | | | |
| ** Film tearing occurred | | | | | | |

**TABLE 2**

| **Sealing on LPS Apparatus** (Pressure: 35 gcm⁻²; Dwell Time: 0.2s) | | | | | | |
|---|---|---|---|---|---|---|
| Film | 100°C | 110°C | 120°C | 130°C | 140°C | 150°C |
| A | 0 | 25 | 305 | 420* | 395* | 455** |
| B | 0 | 0 | 75 | 445** | 520** | 500** |
| C | 110 | 170 | 240 | 440 | 430 | 510 |
| D | 90 | 160 | 210 | 290 | 310 | 390 |
| E | 0 | 0 | 0 | 130 | 220 | 300 |
| F | 0 | 0 | 0 | 180 | 230 | 250 |

| | | | | | | |
|---|---|---|---|---|---|---|
| * Skin delamination occurred | | | | | | |
| ** Film tearing occurred | | | | | | |

The seal strengths of films (A) and (B) increased as a function of the sealing temperature until the seal failed by tearing or skin delamination. Tearing occurred when the bond between the sealable surface of the two sealed films is greater than the tear strength of the film. Skin delamination occurred when the bond between the sealable surfaces of the two sealed films is greater than the bond between the skin layer and the core layer.

The seal strengths of films (C) to (F) increased as a function of the sealing temperature, but without skin tearing or delamination. For general packaging applications where easy opening is required, the objective is to get a film which gives acceptable seal strengths (ie above 300g/25mm) at as low a temperature as possible. At the same time the film should not have seals that are destroyed by tearing or skin delamination when the samples are opened after sealing at high temperature. It is clear that films (C) to (F) meet these criteria, whereas films (A) and (B) do not.

## Claims

1. A peelable film comprising:
(A) a core layer comprising an olefin polymer;
(B) a skin layer on at least one surface of the core layer, comprising:
(i) a blend of a butylene polymer with another olefin polymer; or
(ii) a polymer of butylene and one other olefin; and
(C) a coating layer comprising heat-sealable polymer on the skin layer;
said film being peelable between the coating layer and the skin layer or within the coating layer itself.

2. A peelable film according to claim 1, wherein the core layer is an oriented olefin polymer.

3. A peelable film according to claim 2, wherein said core layer is a biaxially oriented olefin polymer.

4. A peelable film according to claim 1, 2 or 3, wherein said core layer is cavitated.

5. A peelable film according to claim 1, 2 or 3, wherein said core layer comprises isotactic polypropylene.

6. A peelable film according to claim 1, 2 or 3, wherein said core layer comprises high density polyethylene.

7. A peelable film according to any preceding claim, wherein the skin layer comprises one of: a blend of polybutylene with polyethylene; a blend of polybutylene with polypropylene; a blend of polybutylene with a polypropylene copolymer; or a blend of polybutylene with a polypropylene terpolymer.

8. A peelable film according to claim 7, wherein the polypropylene copolymer is a copolymer of ethylene and propylene or of butylene and propylene.

9. A peelable film according to claim 7, wherein the polypropylene terpolymer is a terpolymer of ethylene, propylene, and butylene.

10. A peelable film according to claim 7, 8, or 9 wherein the polyethylene comprises high density polyethylene, medium density polyethylene, low density polyethylene, linear low density polyethylene; or a copolymer of ethylene with a polar monomer.

11. A peelable film according to any of claims 1 to 6, wherein the skin layer comprises a copolymer of propylene and butylene.

12. A peelable film according to any preceding claim, wherein there is a primer for the coating provided between the skin layer and the coating layer.

13. A peelable film according to claim 12, wherein the primer is based on an aqueous polyethyleneimine solution, or is based upon a water-dispersed epoxy resin.

14. A peelable film according to claim 1, wherein the heat-sealable polymer comprises an acrylic polymer or polyvinylidene chloride.

15. A peelable film according to any preceding claim, wherein the skin and coating layers are provided on both surfaces of the core layer.

16. A peelable film according to any preceding claim, wherein when the skin layer is a blend, the polybutylene is present in the skin layer in an amount from 5 to 50 wt%.

17. A peelable film according to claim 16, wherein when the skin layer is a blend, the polybutylene is present in the skin layer in an amount from 10 to 30 wt%.

18. A peelable film according to any of claims 1 to 14, wherein when the skin layer is a polymer of butylene and at least one other olefin, the butylene content of the polymer is from 5 to 50 wt%.

19. A peelable film according to claim 18, wherein when the skin layer is a polymer of butylene and at least one other olefin, the butylene content of the polymer is from 10 to 30 wt%.

20. A method of making a peelable film comprising coextruding a core layer comprising an olefin polymer with a skin layer comprising either: (i) a blend of a butylene polymer with another olefin polymer; or (ii) a polymer of butylene and one other olefin; and coating said skin layer with a coating layer comprising a heat-sealable polymer; the film being peelable between the coating layer and the skin layer or within the coating layer itself.

21. A method according to claim 20, wherein said core layer is oriented by stretching in at least one direction.

22. A method according to claim 21, wherein said core layer is biaxially oriented by stretching in a longitudinal and a transverse direction.

23. A method according to claim 20, 21 or 22, wherein the skin layer is provided with a primer before the coating layer is coated thereon.

24. A method according to claim 23, wherein the skin layer is subjected to a surface modifying treatment prior before the primer is provided.

25. The use of peelable film according to any of claims 1 to 19 in packaging for articles.

## Patentansprüche

1. Abziehbare Folie mit
(A) einer Kernschicht, die ein Olefinpolymer enthält,
(B) einer Hautschicht an mindestens einer Oberfläche der Kernschicht, die
(i) ein Gemisch aus einem Butylenpolymer mit einem anderen Olefinpolymer oder
(ii) ein Polymer aus Butylen und einem anderen Olefin
enthält, sowie
(C) einer Schicht eines Beschichtungsmaterials, die ein heißsiegelbares Polymer enthält, auf der Hautschicht,
wobei die Folie zwischen der Schicht des Beschichtungsmaterials und der Hautschicht oder innerhalb der Schicht des Beschichtungsmaterials selbst abziehbar ist.

2. Abziehbare Folie nach Anspruch 1, worin die Kernschicht ein orientiertes Olefinpolymer ist.

3. Abziehbare Folie nach Anspruch 2, worin die Kernschicht ein biaxial orientiertes Olefinpolymer ist.

4. Abziehbare Folie nach Anspruch 1,2, oder 3, worin die Kernschicht Hohlräume aufweist.

5. Abziehbare Folie nach Anspruch 1, 2 oder 3, worin die Kernschicht isotaktisches Polypropylen enthält.

6. Abziehbare Folie nach Anspruch 1, 2 oder 3, worin die Kernschicht Polyethylen mit hoher Dichte enthält.

7. Abziehbare Folie nach einem der vorstehenden Ansprüche, worin die Hautschicht einen der Stoffe enthält: ein Gemisch von Polybutylen mit Polyethylen, ein Gemisch von Polybutylen mit Polypropylen, ein Gemisch von Polybutylen mit einem Polypropylencopolymer oder ein Gemisch von Polybutylen mit einem Polypropylenterpolymer.

8. Abziehbare Folie nach Anspruch 7, worin das Polypropylencopolymer ein Copolymer aus Ethylen und Propylen oder aus Butylen und Propylen ist.

9. Abziehbare Folie nach Anspruch 7, worin das Polypropylenterpolymer ein Terpolymer aus Ethylen, Propylen und Butylen ist.

10. Abziehbare Folie nach Anspruch 7, 8 oder 9, worin das Polyethylen ein Polyethylen mit hoher Dichte, ein Polyethylen mit mittlerer Dichte, ein Polyethylen mit niedriger Dichte, ein lineares Polyethylen mit niedriger Dichte oder ein Copolymer aus Ethylen mit einem polaren Monomer enthält.

11. Abziehbare Folie nach einem der Ansprüche 1 bis 6, worin die Hautschicht ein Copolymer aus Propylen und Butylen enthält.

12. Abziehbare Folie nach einem der vorstehenden Ansprüche, worin zwischen der Hautschicht und der Schicht des Beschichtungsmaterials ein Primer für das Beschichtungsmaterial vorliegt.

13. Abziehbare Folie nach Anspruch 12, worin der Primer auf einer wäßrigen Polyethyleniminlösung oder einem in Wasser dispergierten Epoxyharz basiert.

14. Abziehbare Folie nach Anspruch 1, worin das heißsiegelbare Polymer ein Acrylpolymer oder Polyvinylidenchlorid enthält.

15. Abziehbare Folie nach einem der vorstehenden Ansprüche, worin die Hautschicht und die Schicht des Beschichtungsmaterials an beiden Oberflächen der Kernschicht vorgesehen sind.

16. Abziehbare Folie nach einem der vorstehenden Ansprüche, worin dann, wenn die Hautschicht ein Gemisch darstellt, das Polybutylen in der Hautschicht in einer Menge von 5 bis 50 Gew.-% vorliegt.

17. Abziehbare Folie nach Anspruch 16, worin dann, wenn die Hautschicht ein Gemisch darstellt, das Polybutylen in der Hautschicht in einer Menge von 10 bis 30 Gew.-% vorliegt.

18. Abziehbare Folie nach einem der Ansprüche 1 bis 14, worin dann, wenn die Hautschicht ein Polymer aus Butylen und mindestens einem anderen Olefin darstellt, der Butylengehalt des Polymers 5 bis 50 Gew.-% beträgt.

19. Abziehbare Folie nach Anspruch 18 , worin dann, wenn die Hautschicht ein Polymer aus Butylen und mindestens einem anderen Olefin darstellt, der Butylengehalt des Polymers 10 bis 30 Gew.-% beträgt.

20. Verfahren zum Herstellen einer abziehbaren Folie, bei dem eine Kernschicht, die ein Olefinpolymer enthält, mit einer Hautschicht coextrudiert wird, wobei die Folie entweder (i) ein Gemisch aus einem Butylenpolymer mit einem anderen Olefinpolymer oder (ii) ein Polymer aus Butylen und einem anderen Olefin enthält, sowie die Hautschicht mit einer Schicht eines Beschichtungsmaterials beschichtet wird, die ein heißsiegelbares Polymer enthält, wobei die Folie zwischen der Schicht des Beschichtungsmaterials und der Hautschicht oder innerhalb der Schicht des Beschichtungsmaterials selbst abziehbar ist.

21. Verfahren nach Anspruch 20, worin die Kernschicht durch Recken in mindestenes einer Richtung orientiert wird.

22. Verfahren nach Anspruch 21, worin die Kernschicht durch Recken in einer Längs- und einer Querrichtung biaxial orientiert wird.

23. Verfahren nach Anspruch 20, 21 oder 22, worin die Hautschicht vor dem Beschichten mit der Schicht des Beschichtungsmaterials mit einem Primer versehen wird.

24. Verfahren nach Anspruch 23, worin die Hautschicht vor dem Aufbringen des Primers einer die Oberfläche modifizierenden Behandlung unterworfen wird.

25. Verwendung der abziehbaren Folie nach einem der Ansprüche 1 bis 19 zum Verpacken von Gegenständen.

## Revendications

1. Un film susceptible d'être arraché ou pelé comprenant:
(A) une couche-noyau comprenant un polymère oléfinique;
(B) une couche-peau disposée sur au moins l'une des faces de la couche-noyau comprenant:
(i) un mélange d'un polymère butylènique et d'un autre polymère oléfinique; ou
(ii) un polymère de butylène et d'une autre oléfine;
et
(C) une couche de revêtement comprenant un polymère thermo-scellable disposée sur la couche-peau,
ledit film étant susceptible d'être arraché ou pelé entre la couche-peau et la couche de revêtement ou au sein de la couche de revêtement elle-même.

2. Un film arrachable selon la revendication 1, dans lequel la couche-noyau est formée d'un polymère oléfinique orienté.

3. Un film arrachable selon la revendication 2, dans lequel la couche-noyau est formée d'un polymère oléfinique à orientation biaxiale.

4. Un film arrachable selon les revendications 1, 2 ou 3 dans lequel la couche-noyau est cavitée.

5. Un film arrachable selon l'une quelconque des revendications 1, 2 ou 3, dans lequel ladite couche-noyau comprend du propylène isotactique.

6. Un film arrachable selon les revendications 1, 2 ou 3, dans lequel ladite couche-noyau comprend du polyéthylène haute densité.

7. Un film arrachable selon l'une quelconque des revendications précédentes, dans lequel la couche-peau comprend au moins un des mélanges suivants: mélanges de polybutylène et de polyéthylène; mélanges de polybutylène et de polypropylène; mélanges de polybutylène et d'un copolymère de polypropylène; ou mélanges de polybutylène et d'un terpolymère de polypropylène.

8. Un film arrachable selon la revendication 7, dans lequel le copolymère de polypropylène est un, copolymère d'éthylène et de propylène ou de butylène et de propylène.

9. Un film arrachable selon la revendication 7, dans lequel le terpolymère de polypropylène est un terpolymère d'éthylène, de propylène et de butylène.

10. Un film arrachable selon l'une quelconque des revendications 7, 8 ou 9, dans lequel le polyéthylène comprend du polyéthylène haute densité, du polyéthylène moyenne densité, du polyéthylène basse densité, du polyéthylène linéaire basse densité, ou un copolymère d'éthylène et d'un monomère polaire.

11. Un film arrachable selon l'une quelconque des revendications 1 à 6, dans lequel la couche-peau comprend un copolymère de propylène et de butylène.

12. Un film arrachable selon l'une quelconque des revendications 1 à 11, dans lequel une couche de primaire est prévue pour la couche de revêtement entre la couche-peau et la couche de revêtement.

13. Un film arrachable selon la revendication 12, dans lequel la couche de primaire est à base d'une solution aqueuse de polyéthylèneimide ou d'une résine époxy en dispersion aqueuse.

14. Un film arrachable selon la revendication 1, dans lequel le polymère thermo-scellable comprend un polymère acrylique ou du chlorure de polyvinylidène.

15. Un film arrachable selon l'une quelconque des revendications précédentes, dans lequel couche-peau et couche de revêtement sont appliquées sur les deux surfaces de la couche-noyau.

16. Un film arrachable selon l'une quelconque des revendications 1 à 15, dans lequel lorsque la couche-peau est un mélange, le polybutylène est présent dans la couche-peau en une quantité de 5 à 50% en poids.

17. Un film arrachable selon la revendication 1 à 16, dans lequel lorsque la couche-peau est un mélange, le polybutylène est présent dans la couche-peau à raison de 10 à 30% en poids.

18. Un film arrachable selon l'une quelconque des revendications 1 à 14, dans lequel lorsque la couche-peau est un polymère de butylène et d'au moins une autre oléfine, la teneur en butylène du polymère est de 5 à 50% en poids.

19. Un film arrachable selon la revendication 18, dans lequel lorsque la couche-peau est un polymère de butylène et d'au moins une autre oléfine, la teneur en butylène du polymère est comprise entre 10 et 30% en poids.

20. Un procédé de fabrication d'un film arrachable comprenant la co-extrusion d'une couche-noyau comprenant un polymère oléfinique et d'une couche-peau comprenant soit:
(i) un mélange d'un polymère de butylène et d'un autre polymère oléfinique;
(ii) un polymère de butylène et d'une autre oléfine
et l'application sur ladite couche-peau d'une couche de revêtement comprenant un polymère thermo-scellable,
le film étant arrachable entre la couche de revêtement et la couche-peau ou au sein de la couche de revêtement elle-même.

21. Un procédé selon la revendication 20, dans lequel la couche-noyau est orientée par étirement selon au moins une direction.

22. Un procédé selon la revendication 21 dans lequel ladite couche-noyau est orientée biaxialement par étirement dans le sens longitudinal et le sens transverse.

23. Un procédé selon les revendications 20, 21 ou 22, dans lequel la couche-peau reçoit une couche de primaire avant l'application de la couche de revêtement.

24. Un procédé selon la revendication 23, dans lequel la couche-peau est soumise à un traitement de modification de surface avant l'application de la couche de primaire.

25. L'utilisation d'un film arrachable selon l'une quelconque des revendications 1 à 19 pour l'emballage d'articles.
